# EUROPEAN PATENT APPLICATION

(11) **EP 3 034 705 A1**
(43) Date of publication of application: **22.06.2016**
(21) Application number: 13891462.7
(22) Date of filing: 13.08.2013
(51) Int. Cl.: E02F 9/22, F15B 13/043

(54) **FLOW CONTROL VALVE FOR CONSTRUCTION EQUIPMENT**

(71) Applicant: Volvo Construction Equipment AB, 631 85 Eskilstuna (SE)
(72) Inventor: JEON, Man-Seuk, Changwon-si Gyeongsangnam-do 642-777 (KR)
(74) Representative: Zimmermann, Tankred Klaus
(86) International application number: PCT/KR2013/007270
(87) International publication number: WO 2015/023010

(57) **Abstract**

Disclosed is a flow control valve for construction equipment capable of effectively operating travelling and working apparatuses when the construction equipment performs complex work by operating the working apparatus while travelling. The invention provides a flow control valve for construction equipment, comprising: a valve body having a parallel passage and an actuator port formed therein, wherein the parallel passage is in fluid communication with an oil channel through which hydraulic oil is supplied from a hydraulic pump, and the actuator port is connected to a hydraulic actuator; a spool embedded in the valve body, wherein the spool supplies the hydraulic oil, supplied from the hydraulic pump, to the hydraulic actuator through an actuator port at one side and returns the hydraulic oil, discharged from the hydraulic actuator, to a tank passage through another actuator port at an opposite side, by communicating the parallel passage with the actuator port when switched; a first valve placed at a passage between the oil channel and the parallel passage and including a first orifice communicated with the oil channel and a second orifice for supplying the hydraulic oil, passing through the first orifice, to the parallel passage; a second valve placed inside the first valve to open/close the first orifice; a resilient member for supporting the first orifice in a closed state by pressurizing the second valve; a cover for confining strokes of the first and second valves by supporting the first valve and one end of the resilient member.

## Description

### TECHNICAL FIELD

The present invention relates to a flow control valve for construction equipment. More particularly, the present invention relates to such a flow control valve for a construction machine in which in the case where a work apparatus or an attachment is operated to perform a combined operation during the traveling of the construction machine, a traveling apparatus and the work apparatus can be operated smoothly.

### BACKGROUND OF THE INVENTION

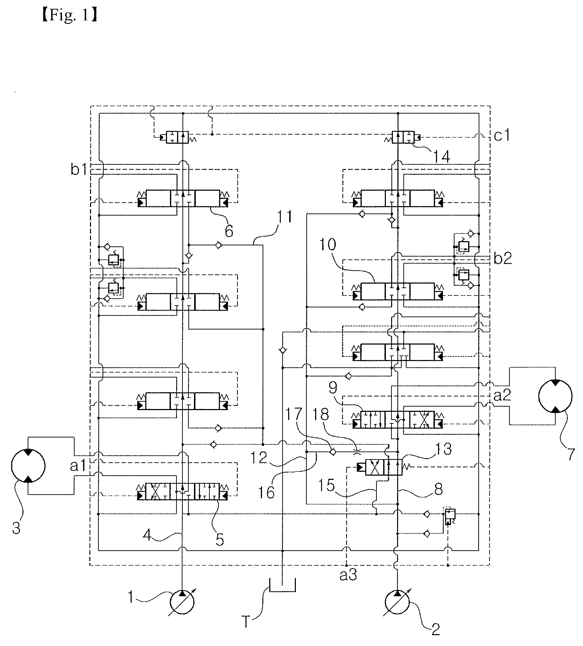

A conventional hydraulic circuit for a construction machine in accordance with the prior art as shown in Fig. 1 includes:
first and second variable displacement hydraulic pumps 1 and 2 (hereinafter, "first and second hydraulic pump");
a left traveling motor 3 and a first work apparatus (e.g., an arm (not shown)), which are driven by hydraulic fluid supplied thereto from the first hydraulic pump 1;
switching valves 5 and 6 that are installed in a flow path 4 of the first hydraulic pump 1 and are configured to be shifted in response to the application of pilot pressures a1 and b1 to the switching valves 5 and 6 to control the hydraulic fluid supplied to the left traveling motor 3 and the first work apparatus;
a right traveling motor 7 and a second work apparatus (e.g., a boom (not shown)), which are driven by hydraulic fluid supplied thereto from the second hydraulic pump 2;
switching valves 9 and 10 that are installed in a flow path 8 of the second hydraulic pump 2 and are configured to be shifted in response to the application of pilot pressures a2 and b2 to the switching valves 9 and 10 to control the hydraulic fluid supplied to the right traveling motor 7 and the second work apparatus; and
a straight traveling valve 13 that is installed in the flow path 8 and is configured to be shifted in response to the application of a pilot pressure a3 to the straight traveling valve 13 to allow the hydraulic fluid from the first hydraulic pump 1 to be respectively supplied to the left and right traveling motors 3 and 7, allow some of the hydraulic fluid from the second hydraulic pump 2 to be supplied to the switching valve 6 for the first work apparatus through a flow path 11, and allow some of the hydraulic fluid from the second hydraulic pump 2 to be supplied to the switching valve 10 for the second work apparatus through a flow path 12.

A) The case will be described in which a traveling operation is performed alone.
   When a spool of the switching valve 5 for the left traveling motor 3 is shifted to the left on the drawing sheet in response to the application of the pilot pressure a1 thereto, the hydraulic fluid discharged from the first hydraulic pump 1 is supplied to the left traveling motor 3 via the flow path 4 and the switching valve 5.
   In the meantime, when a spool of the switching valve 9 for the right traveling motor 7 is shifted to the right on the drawing sheet in response to the application of the pilot pressure a2 thereto, the hydraulic fluid discharged from the second hydraulic pump 2 is supplied to the right traveling motor 7 via the flow path 8, the straight traveling valve 13 and the switching valve 9 or via the flow paths 12 and 16.
   As described above, in the case where the left traveling motor 3 and the right traveling motor 7 are operated alone, the hydraulic fluid discharged from the first hydraulic pump 1 is supplied to the left traveling motor 3, and the hydraulic fluid discharged from the second hydraulic pump 2 is supplied to the right traveling motor 7.
B) The case will be described in which a work apparatus or an attachment is operated to perform a combined operation during the traveling of the construction machine.

The pilot pressure a3 is applied to the straight traveling valve 13 (i.e., the pilot pressure a3 is applied only when the pilot pressure b1 or b2 for the work apparatus is applied simultaneously while the left and right switching valves 5 and 9 is shifted) to cause a spool of the straight traveling valve 13 to be shifted to the right on the drawing sheet. In this case, the pilot pressure b1 is applied to the switching valve 6 for the first work apparatus to cause a spool of the switching valve 6 to be shifted to the left on the drawing sheet, and the pilot pressure c1 is applied to a first center bypass valve 14 to cause a spool of the first center bypass valve 14 to be shifted to the left on the drawing sheet.

Thus, some of the hydraulic fluid from the first hydraulic pump 1 is supplied to the left traveling motor 3 via the flow path 4 and the switching valve 5, and some of the hydraulic fluid from the first hydraulic pump 1 is supplied to the right traveling motor 7 via the flow path 15, the straight traveling valve 13, and the switching valve 9 in this order.

As described above, the hydraulic fluid from the first hydraulic pump 1 is supplied to the left traveling motor 3 and the right traveling motor 7 to drive the left traveling motor 3 and the right traveling motor 7.

In this case, some of the hydraulic fluid from the second hydraulic pump 2 is supplied to the switching valve 6 for the first work apparatus via the flow path 8, the straight traveling valve 13, and the flow path 11 so that a work apparatus such as an arm can be driven. Further, some of the hydraulic fluid from the second hydraulic pump 2 is supplied to the switching valve 10 for the second work apparatus through a flow path 12, and some of the hydraulic fluid from the second hydraulic pump 2 is supplied to the right traveling motor 7 via the flow path 16 and the switching valve 9.

In the meantime, in the case where a traveling operation of the construction machine is operated during the operating of the work apparatus or the work apparatus is operated during the traveling of the construction machine, when the hydraulic fluid from the second hydraulic pump 2 generates a load while passing through the flow path 12, and a check valve 17 and an orifice 18 of the branched flow path 16, the first work apparatus or the second work apparatus can be operated. In other words, when the amount of the load generated in the first work apparatus or the second work apparatus is increased, it is required that the amount of opening of the orifice 18 should be further decreased in order to smoothly supply the hydraulic fluid from the second hydraulic pump 2 to the switching valve 6 to operate the first work apparatus.

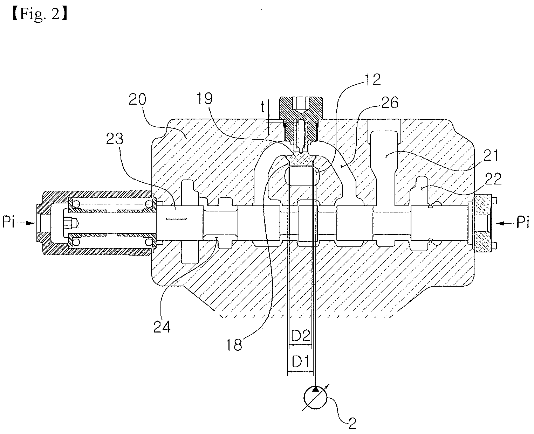

A flow control valve for a construction machine in accordance with the prior art as shown in Fig. 2 includes:
a valve body 20 that includes a parallel path 26 formed therein so as to fluidically communicate with a flow path 12 to which hydraulic fluid from a hydraulic pump 2 is supplied, and actuator ports 21 and 24 formed therein so as to be connected to hydraulic actuators (not shown); and
a spool 23 that is installed in the valve body 20 and is configured to be shifted in response to the application of a pilot pressure thereto to allow the parallel path 26 and the actuator ports 21 and 24 to fluidically communicate with each other to supply the hydraulic fluid from the hydraulic pump 2 to one of the hydraulic actuators (not shown) through one 21 of the actuator ports and to return the hydraulic fluid that is discharged from the one hydraulic actuator to a tank path 22 through the other 24 of the actuator ports.

An orifice 18 for allowing the hydraulic fluid to be supplied from the flow path 12 to the parallel path 26 is formed in the shape of an annular gap. In other words, the orifice 18 is formed as an annular gap between an outer circumferential surface of a poppet 19 and an inner circumferential surface of the valve body 20, which corresponds to the outer circumferential surface of the poppet 19. In this case, an inner diameter D1 of the valve body 20 is a fixed dimension, and thus an outer diameter D2 of the poppet 19, which corresponds to the inner diameter D1 of the valve body 20 is formed as largely as possible within a tolerance range.

As described above, if the outer diameter D2 of the poppet 19, which corresponds to the inner diameter D1 of the valve body 20, is set as a predetermined dimension so that a load is generated by a preset valve in the hydraulic fluid passing through the orifice 18, the amount of opening of the orifice 18 is decreased and thus the work apparatus can be operated. On the other hand, there occurs a collision between the valve body 20 and the poppet 19 during the close contact between the inner circumferential surface of the valve body 20 and the outer circumferential surface of the poppet 19, which corresponds to inner circumferential surface of the valve body 20 by a stack tolerance and a shape tolerance of the valve body 20 and the poppet 19. As a result, when the work apparatus is operated during the traveling of the construction machine, a noise is significantly generated.

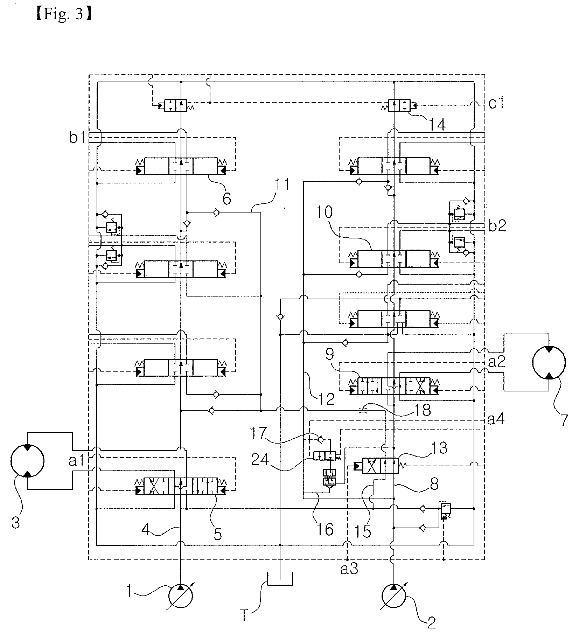

In an attempt to solve the above-mentioned problem, there is disclosed another conventional hydraulic circuit for a construction machine in accordance with the prior art as shown in Fig. 3.

The conventional hydraulic circuit for a construction machine includes:
first and second variable displacement hydraulic pumps 1 and 2 (hereinafter, "first and second hydraulic pump");
a left traveling motor 3 and a first work apparatus (e.g., an arm (not shown)), which are driven by hydraulic fluid supplied thereto from the first hydraulic pump 1;
switching valves 5 and 6 that are installed in a flow path 4 of the first hydraulic pump 1 and are configured to be shifted in response to the application of pilot pressures a1 and b1 to the switching valves 5 and 6 to control the hydraulic fluid supplied to the left traveling motor 3 and the first work apparatus;
a right traveling motor 7 and a second work apparatus (e.g., a boom (not shown)), which are driven by hydraulic fluid supplied thereto from the second hydraulic pump 2;
switching valves 9 and 10 that are installed in a flow path 8 of the second hydraulic pump 2 and are configured to be shifted in response to the application of pilot pressures a2 and b2 to the switching valves 9 and 10 to control the hydraulic fluid supplied to the right traveling motor 7 and the second work apparatus;
a straight traveling valve 13 that is installed in the flow path 8 and is configured to be shifted in response to the application of a pilot pressure a3 to the straight traveling valve 13 to allow the hydraulic fluid from the first hydraulic pump 1 to be respectively supplied to the left and right traveling motors 3 and 7, allow some of the hydraulic fluid from the second hydraulic pump 2 to be supplied to the switching valve 6 for the first work apparatus through a flow path 11, and allow some of the hydraulic fluid from the second hydraulic pump 2 to be supplied to the switching valve 10 for the second work apparatus through a flow path 12; and
a control valve 24 that is installed in a branched flow path 16 including an inlet branchedly connected to a predetermined position of the flow path 12 and an outlet branchedly connected to a predetermined position of the flow path 8 at a downstream side of the straight traveling valve 13, and is configured to be shifted in response to the application of a pilot pressure a4 to the control valve 24 when a combined operation is performed in which the work apparatus is operated during the traveling of the construction machine to block the branched flow path 16 to thereby interrupt the supply of the hydraulic fluid from the second hydraulic pump 2 to the left traveling motor 3 or the right traveling motor 7.

As described above, when the supply of the hydraulic fluid discharged from the second hydraulic pump 2 to the right traveling motor 7 is interrupted or some of the hydraulic fluid the second hydraulic pump 2 is supplied to the right traveling motor 7 by the control valve 24 that is installed in the branched flow path 16 and is shifted in response to the application of the pilot pressure a4 thereto during a combined operation, the problem associated with the conventional hydraulic circuit for a construction machine in accordance with the prior art as shown in Fig. 1 is solved but still entails a problem in that the manufacturing cost is increased due to addition of corresponding parts.

### SUMMARY OF THE INVENTION

Accordingly, the present invention has been made to solve the aforementioned problems occurring in the prior art, and it is an object of the present invention to provide a flow control valve for a construction machine in which in the case where a work apparatus or an attachment is operated to perform a combined operation during the traveling of the construction machine, it is prevented that a boom-up operation or an arm-out operation of the work apparatus is not performed or performed slowly, thereby preventing noise generation.

### TECHNICAL SOLUTION

To achieve the above object, in accordance with an embodiment of the present invention, there is provided a flow control valve for a construction machine, including:
a valve body including a parallel path formed therein so as to fluidically communicating with a flow path to which hydraulic fluid from a hydraulic pump is supplied, and actuator ports formed therein so as to be connected to hydraulic actuators;
a spool installed in the valve body and configured to be shifted to allow the parallel path and the actuator ports to fluidically communicate with each other to supply the hydraulic fluid from the hydraulic pump to the hydraulic actuators through one of the actuator ports and to return the hydraulic fluid that is discharged from the hydraulic actuators to a tank path through the other of the actuator ports;
a first valve installed in a path between the flow path and the parallel path, the first valve being provided with a first orifice formed therein to fluidically communicate with the flow path and a second orifice formed therein to allow the hydraulic fluid that passes through the first orifice to be supplied to the parallel path;
a second valve installed inside the first valve and configured to open or close the first orifice of the first valve;
an elastic member configured to press the second valve to elastically support the first orifice to allow the first orifice to be maintained in a closed state; and
a cover configured to support an end of the first valve and the elastic member to limit the strokes of the first valve and the second valve.

The flow control valve may further include a first seal disposed between the valve body and the cover, and configured to prevent leakage of the hydraulic fluid through a gap between the valve body and the cover that comes into close contact with the valve body.

The flow control valve may further include a second seal disposed between the first valve and the valve body and configured to prevent leakage of the hydraulic fluid through a gap between an outer circumferential surface of the first valve and an inner circumferential surface of the valve body, which corresponds to the outer circumferential surface of the first valve.

The flow control valve may further include a third orifice formed at a predetermined position of the second valve in such a manner as to fluidically communicate with the second orifice of the first valve, and configured to prevent back pressure from being generated in the inside of the first valve when the first orifice is opened.

The first valve may include:
a valve body including a first chamber formed therein;
a coupling part formed on a lower portion of an outer surface of the valve body and having an outer diameter corresponding to an inner diameter of the valve body that is formed with the path;
the first orifice formed on a bottom surface of the valve body in such a manner as to fluidically communicate the first chamber; and
the second orifice formed at a predetermined position of an outer surface of the valve body in such a manner as to fluidically communicate with the first orifice.

The second valve may include:
a valve body including a second chamber formed therein so as to fluidically communicates with the first chamber of the first valve;
a coupling part formed on a lower portion of an outer surface of the valve body and configured to open or close the first orifice;
a retaining step formed on the outer surface of the valve body to allow one end of the elastic member, which presses the second valve against the first valve to elastically support the second valve, to be seated on the retaining step; and
a third orifice formed at a predetermined position of the outer surface of the valve body in such a manner as to fluidically communicate with the second chamber and the second orifice.

### ADVANTAGEOUS EFFECT

The flow control valve for a construction machine in accordance with the present invention as constructed above has the following advantages.

In the case where a work apparatus or an attachment is operated to perform a combined operation during the traveling of the construction machine, it is prevented that a boom-up operation or an arm-out operation is not performed or performed slowly, thereby minimizing energy loss and preventing noise generation.

### BRIEF DESCRIPTION OF THE DRAWINGS

The above objects, other features and advantages of the present invention will become more apparent by describing the preferred embodiments thereof with reference to the accompanying drawings, in which:
Fig. 1 shows an example of a hydraulic circuit diagram for a construction machine in accordance with the prior art; and
Fig. 2 is a schematic cross-sectional view showing a flow control valve for a construction machine in accordance with the prior art;
Fig. 3 shows another example of a hydraulic circuit diagram for a construction machine in accordance with the prior art;
Fig. 4 is a schematic cross-sectional view showing a flow control valve for a construction machine in accordance with an embodiment of the present invention;
Fig. 5 is a schematic cross-sectional view showing a flow control valve for a construction machine in accordance with another embodiment of the present invention; and
Figs. 6(a) and 6(b) are enlarged cross-sectional views showing a first valve and a second valve in a flow control valve for a construction machine in accordance with an embodiment of the present invention.

### * Explanation on reference numerals of main elements in the drawings *

20: valve body
21: actuator port
22: tank path
23: spool
24: actuator port
25: first orifice
26: parallel path
27: second orifice
28: first valve
29: second valve
30: elastic member
31: cover
32: first seal
33: second seal
34: third orifice

### DETAILED DESCRIPTION OF THE INVENTION

Now, a flow rate control valve for a construction machine in accordance with preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and through the specification, like elements are designated by like reference numerals.

In the specification and the claims, when a portion includes an element, it is meant to include other elements, but not exclude the other elements unless otherwise specifically stated herein.

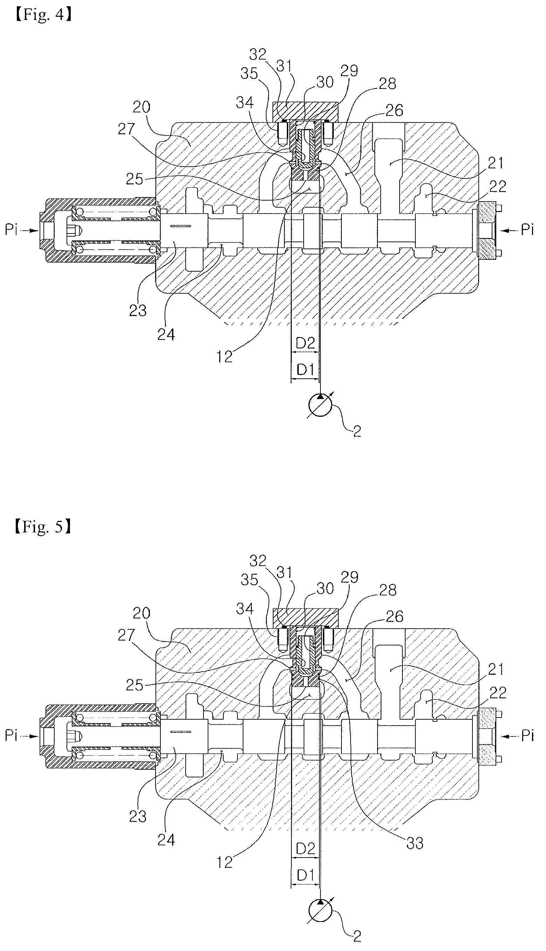

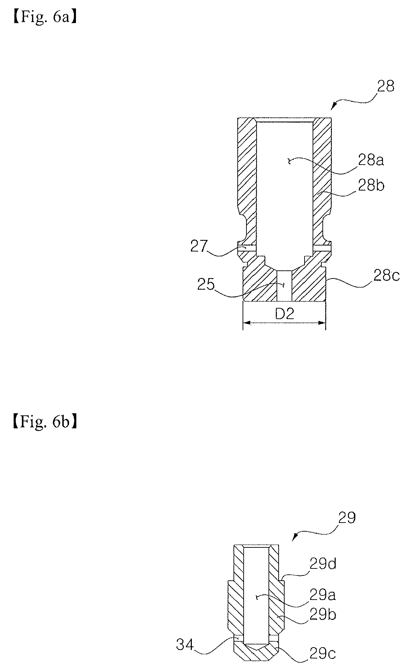

Fig. 4 is a schematic cross-sectional view showing a flow control valve for a construction machine in accordance with an embodiment of the present invention, Fig. 5 is a schematic cross-sectional view showing a flow control valve for a construction machine in accordance with another embodiment of the present invention, and Figs. 6(a) and 6(b) are enlarged cross-sectional views showing a first valve and a second valve in a flow control valve for a construction machine in accordance with an embodiment of the present invention.

Referring to Figs. 4, 6(a) and 6(b), a flow control valve for a construction machine in accordance with an embodiment of the present invention includes:
a valve body 20 that includes a parallel path 26 formed therein so as to fluidically communicate with a flow path 12 to which hydraulic fluid from a hydraulic pump 2 is supplied, and actuator ports 21 and 24 formed therein so as to be connected to hydraulic actuators;
a spool 23 that is installed in the valve body 20 and is configured to be shifted to allow the parallel path 26 and the actuator ports 21 and 24 to fluidically communicate with each other to supply the hydraulic fluid from the hydraulic pump 2 to one of the hydraulic actuators (not shown) through one 21 of the actuator ports and to return the hydraulic fluid that is discharged from the one hydraulic actuator to a tank path 22 through the other 24 of the actuator ports;
a first valve 28 that is installed in a path between the flow path 12 and the parallel path 26, the first valve 28 being provided with a first orifice 25 formed therein to fluidically communicate with the flow path 12 and a second orifice 27 formed therein to allow the hydraulic fluid that passes through the first orifice to be supplied to the parallel path 26;
a second valve 29 that is installed inside the first valve 28 and is configured to open or close the first orifice 25 of the first valve;
an elastic member (e.g., 30 that is configured to press the second valve 29 to elastically support the first orifice 25 to allow the first orifice to be maintained in a closed state; and
a cover 31 that is configured to support one ends of the first valve 28 and the elastic member 30 to limit the strokes of the first valve 28 and the second valve 29.

The flow control valve further includes a first seal 32 disposed between the valve body 20 and the cover 31, and configured to prevent leakage of the hydraulic fluid through a gap between the valve body 20 and the cover 31 that comes into close contact with the valve body 20.

The flow control valve further includes a second seal 33 disposed between the first valve 28 and the valve body 20 and configured to prevent leakage of the hydraulic fluid through a gap between an outer circumferential surface of the first valve 28 and an inner circumferential surface of the valve body 20, which corresponds to the outer circumferential surface of the first valve 28 as shown in Fig. 5.

The flow control valve further includes a third orifice 34 formed at a predetermined position of the second valve 29 in such a manner as to fluidically communicate with the second orifice 27 of the first valve 28, and configured to prevent back pressure from being generated in the inside of the first valve 28 when the first orifice 25 is opened.

The first valve 28 includes:
a valve body 28b that includes a first chamber 28a formed therein;
a coupling part 28c that is formed on a lower portion of an outer surface of the valve body 28b and has an outer diameter D2 corresponding to an inner diameter D1 of the valve body 20 that is formed with the path;
the first orifice 25 that is formed on a bottom surface of the valve body 28b in such a manner as to fluidically communicate the first chamber 28a; and
the second orifice 27 that is formed at a predetermined position of an outer surface of the valve body 28b in such a manner as to fluidically communicate with the first orifice 25.

The second valve 29 includes:
a valve body 29b that includes a second chamber 29a formed therein so as to fluidically communicates with the first chamber 28a of the first valve 28;
a coupling part 29c that is formed on a lower portion of an outer surface of the valve body 29b and is configured to open or close the first orifice 25;
a retaining step 29d that is formed on the outer surface of the valve body 29b to allow one end of the elastic member 30, which presses the second valve 29 against the first valve 28 to elastically support the second valve 29, to be seated on the retaining step; and
a third orifice 34 that is formed at a predetermined position of the outer surface of the valve body 29b in such a manner as to fluidically communicate with the second chamber 29a and the second orifice 27.

In the drawings, a non-explained reference numeral 35 denotes a fastening member for fastening the cover 31 to the valve body 20.

A configuration of the flow control valve for a construction machine in accordance with an embodiment of the present as shown in Figs. 4, 6(a) and 6(b) is the same as that of the conventional flow control valve for a construction machine as shown in Fig. 2, except the first valve 28 installed in a path between the flow path 12 and the parallel path 26, the second valve 29 elastically supported by the elastic member 30 in the first valve 28, the cover 31, the first seal 32 configured to prevent leakage of the hydraulic fluid through a gap between the valve body 20 and the cover 31, and the second seal 33 configured to prevent leakage of the hydraulic fluid through a gap between the first valve 28 and the valve body 20. Thus, the detailed description of the same configuration and operation thereof will be omitted to avoid redundancy, and the same hydraulic parts are denoted by the same reference numerals.

In accordance with the configuration as described above, hydraulic fluid discharged from the second hydraulic pump 2 flows to the flow path 12, and then passes through the first orifice 25 of the first valve 28 to cause the second valve 29 in the first valve 28 to be lifted. The hydraulic fluid which has passed through the first orifice 25 flows to the parallel path 26 via the second orifice 27 fluidically communicating with the first orifice 25.

The spool 23 installed in the valve body 20 is shifted to the left or right on the drawing sheet by the application of a pilot pressure Pi thereto. As one example, if the spool 23 is shifted to the left on the drawing sheet, the hydraulic fluid which has flowed to the parallel path 26 is supplied to a hydraulic actuator (e.g., a right traveling motor) through the actuator port 21.

In this case, the second seal 33 disposed on the outer circumferential surface of the first valve 28 can eliminate a gap between the outer circumferential surface of the first valve 28 having an outer diameter D2 and the inner circumferential surface of the valve body 20 having an inner diameter D1, which corresponds to the outer circumferential surface of the first valve 28. In addition, the first valve 28 is supported at one end thereof by the cover 31 to allow the stroke of the first valve 28 to be limited so that the first valve 28 can be prevented from being moved vertically. Resultantly, the hydraulic fluid can be prevented from leaking through the path between the flow path 12 and the parallel path 26.

Thus, the hydraulic fluid supplied from the second hydraulic pump 2 to the flow path 12 can be supplied to the parallel path 26 only through the first orifice 25 and the second orifice 27.

As described above, the flow control valve for a construction machine in accordance with an embodiment of the present invention as shown in Figs. 4, 6(a) and 6(b) can solve a problem (i.e., occurrence of leakage of the hydraulic fluid through a gap of the path) associated with the conventional flow control valve for a construction machine as shown in Fig. 2 and a problem (i.e., an increase in the manufacturing cost due to addition of corresponding parts) associated in the conventional hydraulic circuit for a construction machine as shown in Fig. 3.

### INDUSTRIAL APPLICABILITY

In accordance with the flow rate control valve for a construction machine of the present invention as constructed above, in the case where a work apparatus or an attachment is operated to perform a combined operation during the traveling of the construction machine, it is prevented that a boom-up operation or an arm-out operation is not performed or performed slowly, thereby minimizing energy loss and preventing noise generation.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A flow control valve for a construction machine, comprising:
a valve body including a parallel path formed therein so as to fluidically communicating with a flow path to which hydraulic fluid from a hydraulic pump is supplied, and actuator ports formed therein so as to be connected to hydraulic actuators;
a spool installed in the valve body and configured to be shifted to allow the parallel path and the actuator ports to fluidically communicate with each other to supply the hydraulic fluid from the hydraulic pump to the hydraulic actuators through one of the actuator ports and to return the hydraulic fluid that is discharged from the hydraulic actuators to a tank path through the other of the actuator ports;
a first valve installed in a path between the flow path and the parallel path, the first valve being provided with a first orifice formed therein to fluidically communicate with the flow path and a second orifice formed therein to allow the hydraulic fluid that passes through the first orifice to be supplied to the parallel path;
a second valve installed inside the first valve and configured to open or close the first orifice of the first valve;
an elastic member configured to press the second valve to elastically support the first orifice to allow the first orifice to be maintained in a closed state; and
a cover configured to support an end of the first valve and the elastic member to limit the strokes of the first valve and the second valve.

2. The flow control valve for a construction machine according to claim 1, further comprising a first seal disposed between the valve body and the cover, and configured to prevent leakage of the hydraulic fluid through a gap between the valve body and the cover that comes into close contact with the valve body.

3. The flow control valve for a construction machine according to claim 1, further comprising a second seal disposed between the first valve and the valve body and configured to prevent leakage of the hydraulic fluid through a gap between an outer circumferential surface of the first valve and an inner circumferential surface of the valve body, which corresponds to the outer circumferential surface of the first valve.

4. The flow control valve for a construction machine according to claim 1, further comprising a third orifice formed at a predetermined position of the second valve in such a manner as to fluidically communicate with the second orifice of the first valve, and configured to prevent back pressure from being generated in the inside of the first valve when the first orifice is opened.

5. The flow control valve for a construction machine according to claim 1, wherein the first valve comprises:
a valve body including a first chamber formed therein;
a coupling part formed on a lower portion of an outer surface of the valve body and having an outer diameter corresponding to an inner diameter of the valve body that is formed with the path;
the first orifice formed on a bottom surface of the valve body in such a manner as to fluidically communicate the first chamber; and
the second orifice formed at a predetermined position of an outer surface of the valve body in such a manner as to fluidically communicate with the first orifice.

6. The flow control valve for a construction machine according to claim 5, wherein the second valve comprises:
a valve body including a second chamber formed therein so as to fluidically communicates with the first chamber of the first valve;
a coupling part formed on a lower portion of an outer surface of the valve body and configured to open or close the first orifice;
a retaining step formed on the outer surface of the valve body to allow one end of the elastic member, which presses the second valve against the first valve to elastically support the second valve, to be seated on the retaining step; and
a third orifice formed at a predetermined position of the outer surface of the valve body in such a manner as to fluidically communicate with the second chamber and the second orifice.
